# FASCICULE DE BREVET EUROPEEN

(11) **EP 3 670 308 B1**
(45) Date de publication et mention de la délivrance du brevet: **29.09.2021**
(21) Numéro de dépôt: 19217324.3
(22) Date de dépôt: 18.12.2019
(51) Int. Cl.: B62D 35/00, B62D 25/18

(54) **CARROSSERIE DE VÉHICULE ROUTIER DE TRANSPORT DE MARCHANDISES MUNIE DE CARÉNAGES LATÉRAUX**
KAROSSERIE EINES STRASSENFAHRZEUGS FÜR DIE BEFÖRDERUNG VON GÜTERN, DIE MIT SEITENVERKLEIDUNGEN VERSEHEN IST
BODY OF A ROAD VEHICLE FOR TRANSPORTING GOODS PROVIDED WITH LATERAL FAIRINGS

(30) Priorité: 21.12.2018 FR 1873765
(43) Date de publication de la demande: 24.06.2020
(73) Titulaire: Jean Chereau SAS, 50220 Ducey (FR)
(72) Inventeur: LECUIR, Christophe, 50300 MARCEY LES GREVES (FR); RENOUF, Gildas, 50370 LE GRAND-CELLAND (FR)
(74) Mandataire: Casalonga

(56) Documents cités:
- WO-A1-03/093066
- DE-A1-102011 106 650
- JP-A- H06 227 334
- JP-U- H0 620 174
- US-B1- 7 374 229

## Description

La présente invention concerne le domaine des carrosseries de véhicules routiers de transport de marchandises tels que des camions, des semi-remorques, des remorques ou des porteurs.

L'espace de chargement intérieur d'une carrosserie est délimité par deux flancs verticaux opposés, un plancher, un plafond ou pavillon et une face avant. L'espace de chargement intérieur présente un accès arrière situé à l'opposé de la face avant et la carrosserie est munie d'un dispositif de fermeture de cet accès arrière. Ce dispositif de fermeture peut par exemple comprendre une porte à un ou plusieurs battants ou encore un rideau coulissant.

De sorte à réduire la trainée aérodynamique d'un véhicule routier de transport de marchandises et par conséquence sa consommation de carburant, il est connu d'équiper la carrosserie d'un ou de plusieurs déflecteurs aérodynamiques.

Le document WO 03/093066 A1 décrit une carrosserie de véhicule routier de transport de marchandises selon le préambule de la revendication 1.

Une solution consiste par exemple à prévoir sous la carrosserie deux jupes ou carénages latéraux qui s'étendent chacun vers le bas en-dessous de l'un des flancs de la carrosserie.

Classiquement, ce type de carénage latéral comprend une pluralité de panneaux monoblocs alignés dans le sens longitudinal et articulés sous le plancher de la carrosserie. Chaque panneau est mobile entre une position abaissée aérodynamique et une position relevée pour permettre l'accès sous le plancher la carrosserie.

Les panneaux sont montés à rotation sur des poteaux verticaux qui sont eux-mêmes fixés sur le plancher de la carrosserie. Pour faciliter le relevage de chaque panneau, il est généralement prévu des vérins disposés entre celui-ci et les poteaux verticaux.

Dans la pratique, il arrive fréquemment que les panneaux des carénages latéraux subissent des chocs, par exemple lors du roulage ou encore lors des mises à quai du véhicule. En outre, lors des mises à quai du véhicule dans des quais spécifiques équipés par exemple de guides de hauteur importante ou de dispositif de blocages de roue, il peut se produire une détérioration des poteaux verticaux.

Ceci engendre des frais de réparation et de remplacement qui réduisent considérablement les gains liés à la réduction de consommation de carburant.

La présente invention vise à remédier à ces inconvénients.

L'invention a pour objet une carrosserie de véhicule routier de transport de marchandises selon la revendication Cette carrosserie comprend deux flancs latéraux verticaux, un pavillon, et un plancher assemblés entre eux et délimitant en partie un espace de chargement intérieur.

La carrosserie comprend en outre au moins un carénage latéral comprenant au moins un panneau s'étendant longitudinalement et mobile à rotation entre une position abaissée d'utilisation dans laquelle ledit panneau est situé verticalement en-dessous de l'un des flancs, et une position relevée.

La carrosserie comprend au moins un vérin pour exercer, au moins au cours du mouvement de relevage dudit panneau, un effort de poussée tendant à déplacer ledit panneau vers la position relevée

Selon l'invention ledit panneau comprend une pluralité de profilés longitudinaux successifs dans le sens de la hauteur dudit panneau, et des montants supportant les profilés longitudinaux.

Selon l'invention lesdits profilés longitudinaux dudit panneau délimitent conjointement une face extérieure continue dans le sens de la hauteur dudit panneau.

Selon l'invention chaque montant dudit panneau est équipé, à une extrémité supérieure, d'un organe de montage articulé sur un support associé fixé au plancher de ladite carrosserie, ledit vérin étant articulé sur l'organe de montage d'un des montants dudit panneau et sur le support associé.

Le support fixé au plancher peut être un support propre à chaque montant. En variante, il est possible de prévoir un support commun aux montants d'un même panneau, ou encore un support commun aux montants de plusieurs panneaux dudit carénage latéral.

Le sens « longitudinal » est utilisé en considérant le sens de la longueur de la carrosserie.

Par « profilé », on entend un élément de longueur plus importante que sa hauteur. La section de chaque profilé peut être constante ou variable le long de sa longueur. De préférence, les profilés sont réalisés en matière métallique, notamment en aluminium. Les profilés peuvent également être réalisés en d'autres matériaux, par exemple en matière plastique ou synthétique.

Avec la carrosserie de l'invention, en cas de détérioration dudit panneau du carénage latéral, le ou les profilés endommagés de ce panneau peuvent être démontés et remplacés indépendamment des autres profilés de ce panneau. On réduit ainsi grandement les frais de réparation ou de remplacement.

En outre, lorsque ce panneau du carénage latéral est relevé, les montants de support des profilés sont aussi relevés avec ces profilés, ce qui libère entièrement la zone au-dessous de la carrosserie.

Ceci est particulièrement avantageux lors des mises à quai du véhicule dans des quais spécifiques tels qu'indiqués précédemment. On limite donc considérablement le risque d'accrochage dudit carénage lors des mises à quai.

Par ailleurs, l'agencement des profilés dans le sens de la hauteur du panneau qui délimitent la face extérieure continue favorise l'obtention de bonnes propriétés aérodynamiques. Il n'existe pas d'espace vertical entre les faces extérieures de deux profilés adjacents.

Par ailleurs, avec la prévision d'au moins un organe de montage à l'extrémité supérieure de chaque montant dudit panneau, ce panneau peut être relevé dans une position oblique tout en permettant audit vérin de rester localisé principalement dans la zone sous-châssis. Ainsi, ledit vérin n'est pas exposé aux chocs dans cette position relevée du panneau.

Selon une conception particulière, les profilés longitudinaux dudit panneau sont assemblés entre eux. On s'assure ainsi d'avoir un bon alignement vertical des profilés longitudinaux. En variante, il reste cependant possible de ne pas assembler les profilés longitudinaux dudit panneau entre eux, ou encore de ne pas assembler tous les profilés entre eux.

Ces profilés peuvent par exemple être assemblés par emboitement ou par encliquetage, ce qui facilite leur assemblage et leur démontage en cas de remplacement. De préférence, chaque profilé longitudinal dudit panneau est fixé sur les montants. En variante, au moins un profilé, par exemple le profilé supérieur dudit panneau, peut ne pas être fixé sur les montants.

Concernant ledit organe de montage, celui-ci est de préférence rapporté sur le montant associé pour des raisons de simplicité de fabrication. En variante, il reste cependant possible de prévoir un organe de montage réalisé monobloc avec le montant associé.

Ledit organe de montage est articulé autour d'un axe d'articulation monté sur le support associé.

Dans le cas où l'organe de montage est rapporté, il peut être formé de deux platines. En variante, il est bien entendu possible de prévoir d'autres conceptions.

Dans la position abaissée dudit panneau, les axes d'articulation dudit vérin sont décalés vers l'intérieur de la carrosserie par rapport au flanc latéral situé du côté dudit panneau.

Avantageusement, ledit vérin est articulé de sorte à exercer, dans la position abaissée dudit panneau, un effort de poussée tendant à maintenir ledit panneau latéral dans ladite position abaissée. Lors du roulage avec le panneau en position abaissée, ceci favorise le maintien de cette position même sous l'effet des vibrations. Avantageusement, le vérin est articulé de sorte à exercer, dans la position relevée dudit panneau, un effort de poussée tendant à maintenir ledit panneau dans ladite position relevée.

Dans un mode de réalisation particulier, ledit carénage latéral comprend en outre au moins un organe de verrouillage monté sur l'organe de montage de l'un des montants dudit panneau et coopérant avec un organe de verrouillage monté sur le support associé pour le blocage dudit panneau dans la position abaissée. On s'assure ainsi du blocage en position abaissée du panneau, indépendamment de l'effort exercé par le vérin d'actionnement. Ceci offre une sécurité supplémentaire. En variante, il pourrait cependant être envisagé de ne pas prévoir un tel blocage ou verrouillage dudit panneau.

Avec un tel mode de réalisation particulier, ledit carénage latéral peut comprendre en outre un levier de commande accessible depuis l'extérieur et relié audit organe de verrouillage monté sur le support pour commander le déplacement dudit organe de verrouillage d'une position verrouillée dans laquelle il bloque un déplacement de l'organe de verrouillage monté sur l'organe de montage à une position déverrouillée dans laquelle ledit organe de verrouillage est laissé libre.

Ceci permet de pouvoir déverrouiller aisément le carénage latéral depuis l'extérieur, i.e. d'une zone située hors de la zone sous châssis.

Ledit carénage latéral peut comprendre un unique organe de verrouillage de sorte à limiter le nombre d'opérations à effectuer par l'opérateur.

Avantageusement, ledit organe de verrouillage monté sur le support peut être configuré pour rester dans la position déverrouillée après actionnement du levier de commande et relâchement dudit levier. Ainsi, le verrouillage dudit panneau peut par la suite être réalisé par simple retour dans sa position abaissée sans actionnement spécifique.

Selon une conception particulière, ledit carénage latéral peut comprendre en outre un organe de réglage de l'inclinaison dudit panneau monté sur le support.

Dans un mode de réalisation particulier, dans sa position abaissée, ledit panneau vient en contact contre le flanc latéral associé. Ledit panneau peut venir directement en contact contre le flanc latéral associé, ou indirectement par l'intermédiaire d'une ceinture de finition montée à l'extrémité inférieure dudit flanc.

De préférence, ledit carénage latéral comprend une pluralité de panneaux successifs dans le sens longitudinal et mobiles à rotation indépendamment, chaque panneau comprenant une pluralité de profilés longitudinaux successifs dans le sens de la hauteur dudit panneau, et des montants supportant lesdits profilés dudit panneau et articulés sur ladite carrosserie. Lesdits profilés longitudinaux dudit panneau délimitent conjointement une face extérieure continue dans le sens de la hauteur dudit panneau.

De préférence également, la carrosserie comprend deux carénages latéraux opposés tels que définis précédemment.

La présente invention sera mieux comprise à la lecture de la description détaillée d'un mode de réalisation pris à titre d'exemple nullement limitatif et illustré par les dessins annexés sur lesquels :
[Fig 1] est une vue en perspective d'une carrosserie de véhicule routier de transport de marchandises selon un exemple de réalisation qui est équipée d'un carénage latéral dans une position abaissée d'utilisation,
[Fig 2] est une vue en perspective de la carrosserie de la figure 1 dans une position relevée du carénage latéral,
[Fig 3] est une vue de détail de la figure 2,
[Fig 4] est une vue en perspective éclatée d'un panneau du carénage latéral de la carrosserie des figures 1 et 2,
[Fig 5] est une vue en perspective de détail de la carrosserie des figures 1 et 2,
[Fig 6]
[Fig 7]

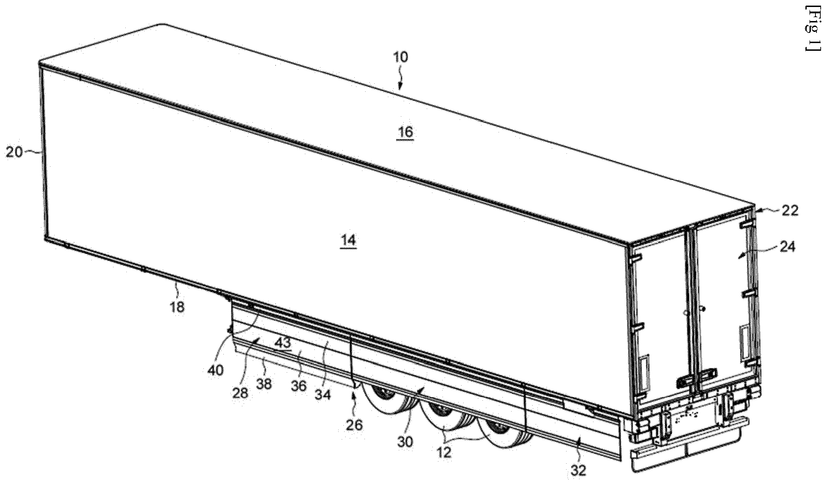

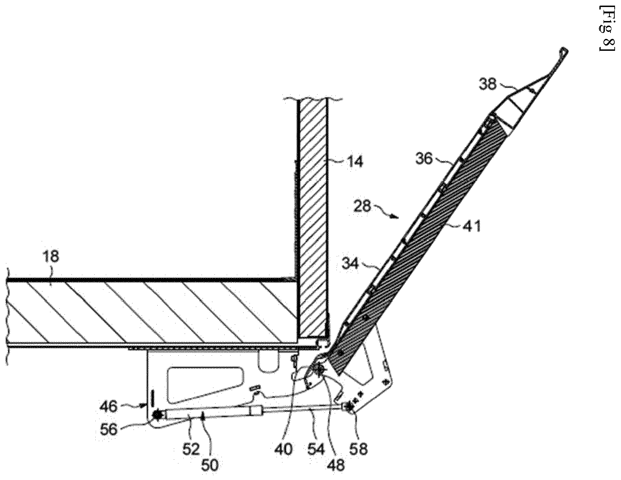

[Fig 8] sont des vues en coupe partielle de la carrosserie de la figure 1 illustrant le passage d'un panneau du carénage latéral de sa position abaissée d'utilisation à sa position relevée, et
[Fig. 9]

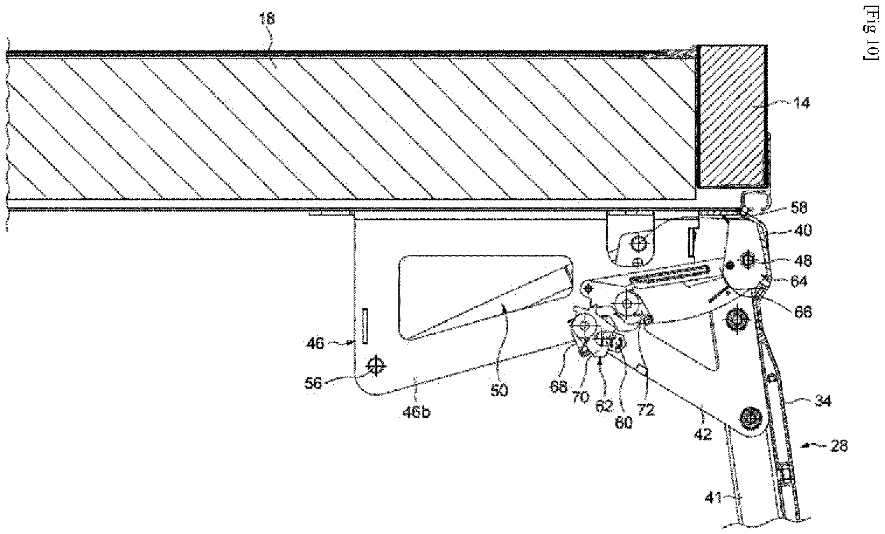

[Fig. 10] sont des vues en coupe partielle de la carrosserie de la figure 1 selon un autre plan de coupe illustrant le verrouillage et le déverrouillage dudit panneau du carénage latéral.

Sur la figure 1, on a représenté une carrosserie de véhicule de transport routier, référencée 10 dans son ensemble, qui est équipée d'un châssis (non visible) s'étendant longitudinalement et soutenu par des roues 12.

La carrosserie 10 comprend deux flancs 14 latéraux verticaux opposés s'étendant longitudinalement (un seul étant visible sur la figure), un plafond ou pavillon 16, un plancher 18, et une face avant 20 qui sont assemblés entre eux pour délimiter un espace de chargement intérieur.

La carrosserie 10 comprend également un cadre arrière 22, nommé aussi custode, ayant une fonction de rigidification de la carrosserie. Le cadre arrière 22 rigide est fixé sur les extrémités arrière des flancs 14, du pavillon 16 et du plancher 18. Le cadre arrière 22 peut par exemple être réalisé en acier, notamment en acier inoxydable.

La carrosserie 10 comprend également un dispositif 24 de fermeture d'une ouverture ou accès arrière à l'espace de chargement intérieur. Le dispositif 24 de fermeture est mobile entre une position de fermeture de l'accès arrière et au moins une position d'ouverture. Dans l'exemple de réalisation illustré, le dispositif 24 de fermeture comprend une porte à deux battants articulés à rotation sur des montants verticaux du cadre arrière 22. Alternativement, la porte peut être à un seul battant. Dans une autre variante, le dispositif 24 de fermeture peut comprendre un rideau de fermeture coulissant pourvu d'une pluralité de panneaux transversaux articulés entre eux.

La carrosserie 10 comprend également deux carénages 26 latéraux aérodynamiques opposés (un seul étant visible sur la figure) qui s'étendent longitudinalement et qui sont disposés chacun en-dessous d'un des flancs 14 dans la position illustrée à la figure 1. Les carénages 26 forment des carénages latéraux droite et gauche. Les deux carénages 26 sont identiques entre eux.

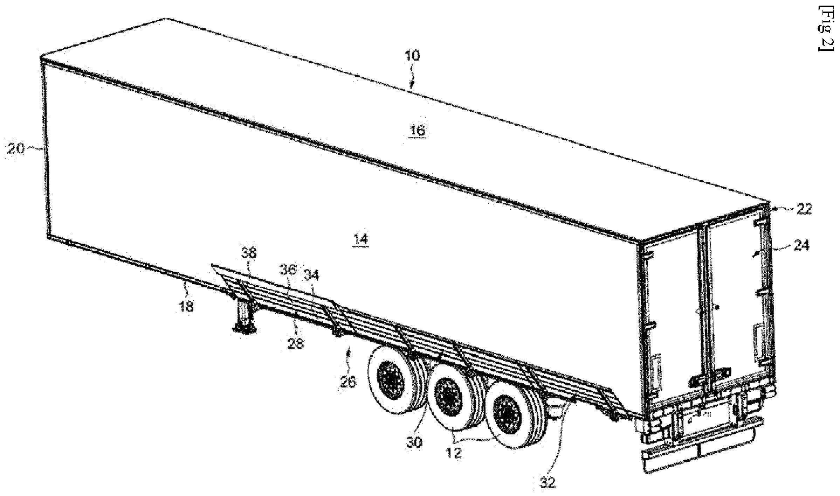

Chaque carénage 26 comprend une pluralité de panneaux 28, 30 et 32 agencés successivement dans le sens longitudinal. Comme cela va être décrit plus en détail par la suite, chaque panneau 28 à 32 est mobile à rotation autour d'axes d'articulation horizontaux entre une position abaissée d'utilisation comme cela est illustré à la figure 1 et une position relevée illustrée à la figure 2.

Dans la position abaissée d'utilisation, chaque panneau 28 à 32 prolonge en partie verticalement vers le bas le flanc 14 adjacent. Dans cette position, chaque panneau 28 à 32 est situé verticalement en-dessous dudit flanc. Dans la position relevée, les panneaux 28 à 32 permettent de pouvoir accéder sous le plancher 18. Dans la position relevée, les panneaux 28 à 32 s'étendent ici obliquement vers le haut.

Dans l'exemple de réalisation, chaque carénage 26 comprend trois panneaux. Le panneau 28 est disposé dans une zone de la carrosserie dite "empattement" ou "porte-palettes", le panneau 30 est disposé dans une zone dite "train roulant" et le panneau 32 est disposé dans une zone de la carrosserie dite "porte à faux". En variante, le nombre et/ou la disposition des panneaux de chaque carénage 26 peuvent être modifiés. Dans une variante de réalisation, le carénage 26 peut également être équipé en outre d'un panneau mobile à rotation autour d'un axe articulation horizontal par exemple dans une zone de la carrosserie dite "béquilles".

On va maintenant décrire en détail la conception et le montage du panneau 28, étant entendu que la conception et le montage des deux autres panneaux 30, 32 sont analogues.

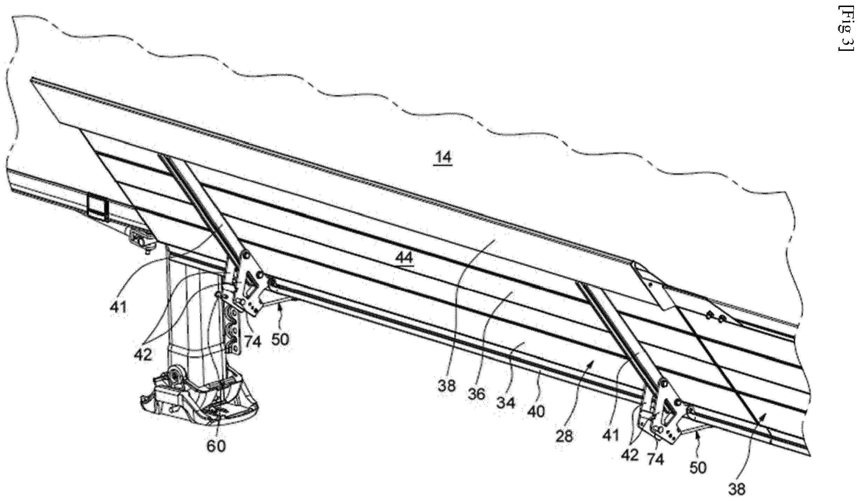

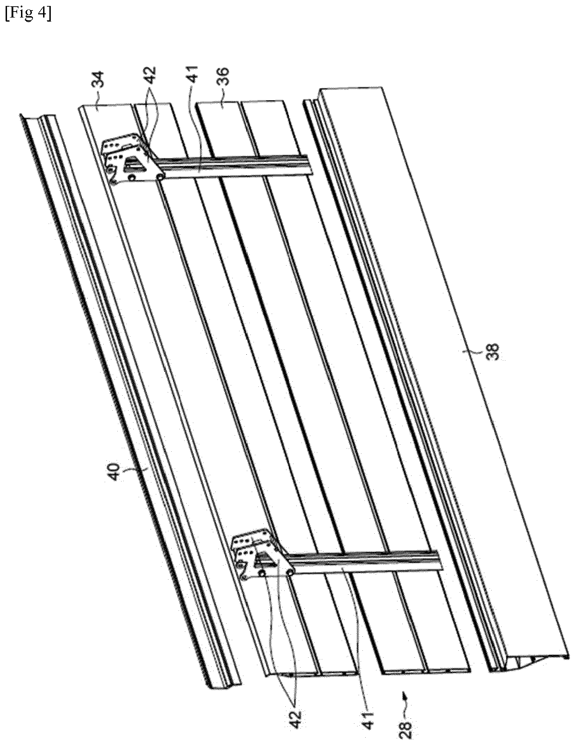

Comme illustré plus visiblement aux figures 3 et 4, le panneau 28 du carénage latéral comprend une pluralité de profilés 34, 36, 38, 40 s'étendant longitudinalement, et des montants 41 sur lesquels sont montés ces panneaux. Comme cela sera décrit plus en détail par la suite, les montants 41 sont articulés au plancher 18 de la carrosserie.

Les profilés 34 à 40 longitudinaux sont solidaires des montants 41. Chaque profilé 34 à 40 peut par exemple être réalisé en matière métallique, notamment en aluminium ou encore en matière plastique, notamment par extrudage. Dans l'exemple de réalisation illustré, les profilés du panneau 28 sont au nombre de quatre. En variante, il est possible de prévoir un nombre différent de profilés, par exemple deux, trois ou cinq ou plus.

Les profilés 34 à 40 sont disposés successivement dans le sens de la hauteur du panneau 28. Autrement dit, les profilés 34 à 40 sont disposés les uns au-dessus des autres. Le profilé référencé 38 est le profilé inférieur du panneau 28 et le profilé référencé 40 est le profilé supérieur dudit panneau. Dans l'exemple de réalisation illustré, les profilés 34 à 40 du panneau sont configurés pour être assemblés entre eux par emboitement dans le sens vertical. Dans ce but, une gorge longitudinale est pratiquée sur chaque profilé à l'intérieur de laquelle vient s'engager à force une saille longitudinale complémentaire du profilé adjacent.

Les profilés 34 à 40 délimitent une face extérieure 43 (figure 1) du panneau qui est continue dans le sens de la hauteur. Autrement dit, il n'existe pas d'espace vertical entre les profilés 34 à 40 et donc une continuité des faces extérieures de ces profilés. La face extérieure 43 est également continue dans le sens longitudinal. Les profilés 34 à 40 délimitent une face intérieure 44 du panneau qui est opposée dans le sens transversal à la face extérieure 43.

Comme indiqué précédemment, dans la position abaissée d'utilisation, le panneau 28 prolonge en partie verticalement vers le bas le flanc 14. La face extérieure 43 du panneau forme une face aérodynamique le long de laquelle, lors du roulage, s'écoule un flux d'air vers l'arrière.

Dans l'exemple de réalisation illustré, dans la position abaissée d'utilisation, le profilé 40 supérieur du panneau 28 vient en appui contre une ceinture de finition (non référencée) montée à l'extrémité inférieure du flanc 14. En variante, il pourrait être possible de prévoir un espace vertical entre ce profilé 40 et la ceinture de finition.

Les profilés 34 à 38 sont fixés sur les montants 41 du panneau. Chaque profilé 34 à 38 est fixé par boulonnage. En variante, il pourrait être possible de prévoir un autre type de fixation. Le profilé 40 supérieur est fixé par emboitement sur le profilé 34 immédiatement adjacent. Le profilé 40 supérieur peut également être fixé par emboitement et collage sur le profilé 34. La face intérieure 44 du panneau est montée contre les montants 41.

Les montants 41 sont identiques entre eux. Dans l'exemple de réalisation illustré, les montants se présentent sous forme de barres rectilignes. Les montants 41 peuvent par exemple être réalisés en matière métallique, notamment en acier. Dans l'exemple de réalisation illustré, les montants 41 du panneau 28 sont au nombre de deux. En variante, il est possible de prévoir un nombre différent de montants.

On va maintenant décrire le montage rotatif ou articulation des montants 41 du panneau 28 sur la carrosserie.

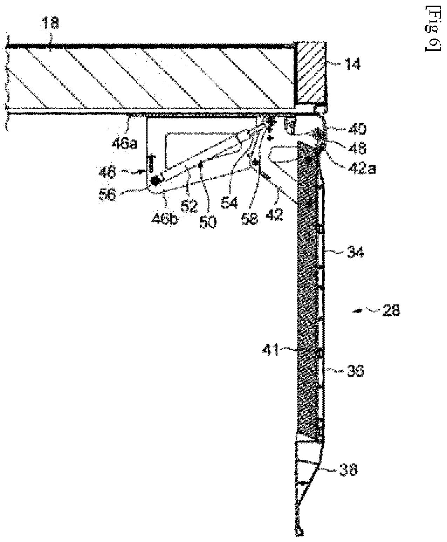

Chaque montant 41 est équipé, à une extrémité supérieure, d'une paire de platines 42 qui sont fixées sur ledit montant. Les platines 42 sont ici fixées par vissage. Les deux platines 42 de chaque montant sont identiques entre elles. Les platines 42 sont disposées transversalement aux profilés 34 à 40. La majeure partie de chaque platine 42 s'étend transversalement du côté opposé aux profilés 34 à 40 à partir du montant 41 associé. Comme illustré plus visiblement à la figure 6, chaque platine 42 comprend une patte 42a qui est située axialement entre l'extrémité supérieure du montant 41 associé et le flanc 14 dans la position abaissée d'utilisation du panneau 28.

La carrosserie 10 comprend également, associé à chaque paire de platines 42, un support 46 fixé sous le plancher 18. Chaque support 46 est fixé par tout moyen approprié par exemple par vissage. Chaque support 46 reste en retrait vers l'intérieur par rapport au flanc 14.

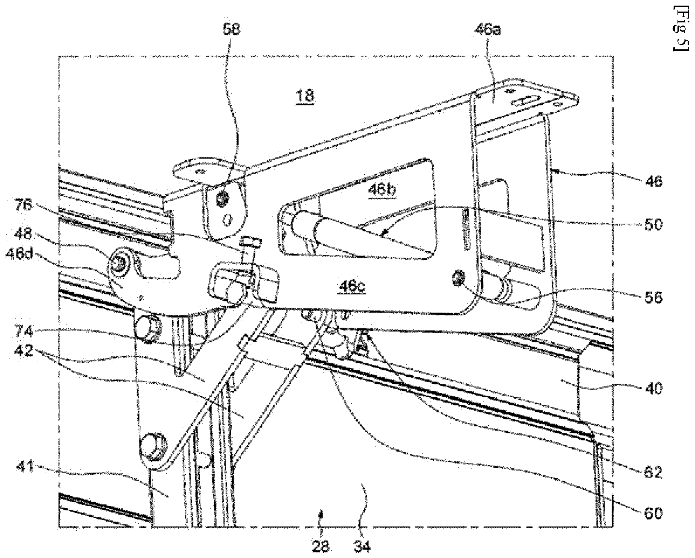

En se référant à la fois aux figures 5 et 6, chaque support 46 comprend une embase 46a et deux ailes 46b, 46c opposées et espacées. L'embase 46a est fixée au plancher 18 et les ailes 46b, 46c orientées transversalement prolongent verticalement vers le bas les extrémités opposés de l'embase. Chaque support 46 présente ainsi en section droite une forme en U orienté vers le bas. Chaque support 46 comprend également une patte 46d prolongeant chaque aile 46b, 46c. Les pattes 42a de la paire de montants viennent se loger entre les pattes 46d du support associé. Un axe d'articulation 48 horizontal s'étend au travers de ces pattes 42a, 46d. L'axe d'articulation 48 est orienté longitudinalement. Les platines 42 de chaque montant 41 sont situées dans la position abaissée du panneau 28 entre les ailes 46b, 46c du support associé.

Chaque montant 41 du panneau 28 est articulé sur le support 46 autour de l'axe d'articulation 48 associé. Plus précisément, les platines 42 solidaires de chaque montant 41 sont articulées sur le support 46 associé. Les platines 42 forment un organe de montage de chaque montant 41 sur le support 46 associé.

Le carénage latéral 26 comprend encore, pour chaque montant 41 du panneau 28, un vérin 50 d'actionnement agissant sur les platines 42 associées audit montant. Dans l'exemple de réalisation illustré, chaque vérin 50 est monté entre les ailes 46b, 46c du support associé.

Chaque vérin 50 comprend un corps 52 articulé sur le support 46 associé, et une tige 54 articulée sur les platines 42. Le corps 52 et la tige 54 du vérin d'actionnement sont respectivement articulés à rotation autour d'axes d'articulation 56, 58 horizontaux. Les axes d'articulation 56, 58 sont orientés longitudinalement et sont distincts de l'axe d'articulation 48 du panneau. Le vérin 50 d'actionnement est du type pneumatique. En variante, il est possible de prévoir un vérin hydraulique ou encore un vérin mécanique comprenant un ressort à l'intérieur d'une cage.

Dans la position abaissée du panneau 28, l'axe d'articulation 58 du vérin est décalé vers l'intérieur et vers le haut par rapport à l'axe d'articulation 48 du panneau. L'axe d'articulation 56 du vérin est décalé vers l'intérieur et vers le bas par rapport à l'axe d'articulation 56 et par rapport à l'axe d'articulation 48 du panneau. Dans cette position le vérin 50 s'étend obliquement vers le haut et est orienté en direction du flanc 14.

Dans la position abaissée du panneau 28, les platines 42 associées à chaque montant 41 viennent buter contre le support 46 fixé au plancher 18 comme cela sera décrit plus en détail par la suite. Dans cette position abaissée du panneau 28, l'effort de poussée exercé par la tige du vérin 50 tend à maintenir plaquées les platines 42 contre le support 46 associé. Le vérin 50 tend donc à maintenir le panneau 28 dans cette position abaissée. On limite ainsi sur le panneau 28 les effets liés aux vibrations lors du roulage.

Lorsque l'opérateur souhaite faire passer le panneau 28 de sa position abaissée vers sa position relevée, il le fait pivoter dans le sens horaire. Lors de ce mouvement de pivotement, chaque montant 41 du panneau 28 pivote autour de l'axe d'articulation 48 associé.

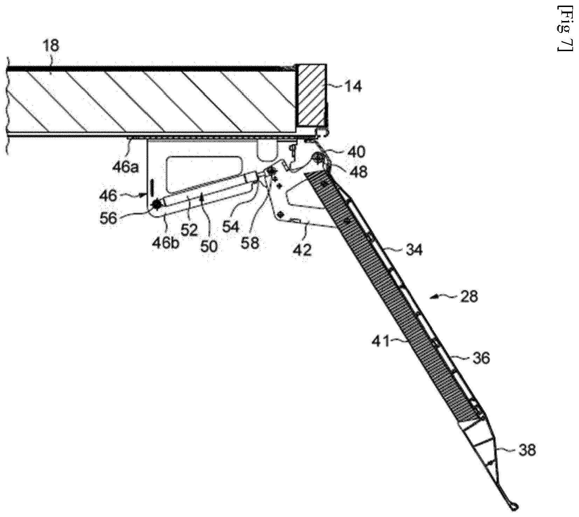

Lors de ce mouvement de rotation du panneau 28, l'effort de poussée exercé par le vérin 50 associé à chaque montant tend à faciliter le relevage dudit panneau dès que la position neutre dudit vérin a été dépassée. Par « position neutre », on entend la position dans laquelle les axes d'articulation 56, 58 du vérin sont alignés sur l'axe d'articulation 48 des montants associés comme cela est illustré à la figure 7.

Le relevage du panneau 28 peut être réalisé jusqu'à ce que la tige 54 du vérin soit en fin de course comme cela est illustré à la figure 8. Dans l'exemple de réalisation illustré, dans la position relevée du panneau 28, il n'existe aucun contact entre celui-ci et la ceinture de finition montée à l'extrémité inférieure du flanc 14. En variante, il pourrait être possible de prévoir que le panneau 28 vienne buter contre cette ceinture dans sa position relevée. Dans ce cas, la tige 54 du vérin peut ne pas être en fin de course lorsque le panneau bute contre la ceinture.

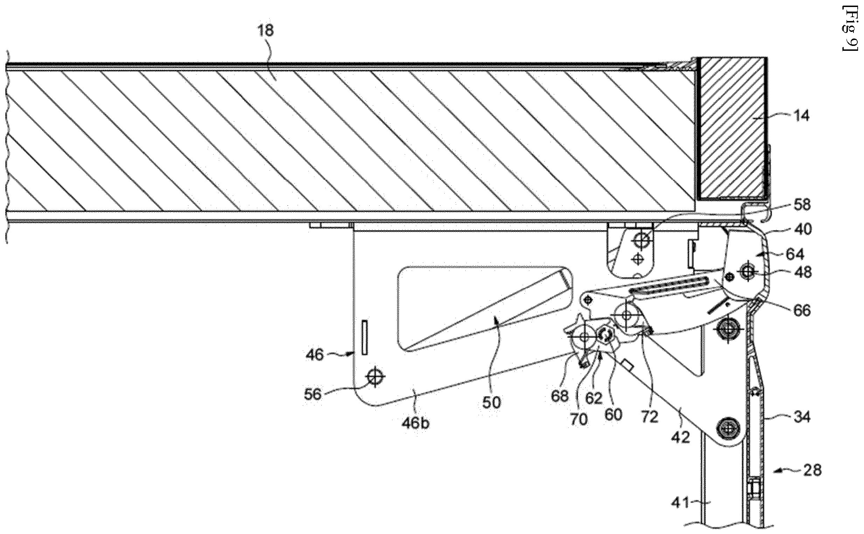

Comme indiqué précédemment, chaque vérin 50 tend à maintenir le panneau 28 dans sa position abaissée. Dans l'exemple de réalisation illustré, de sorte à assurer le blocage en position abaissée du panneau 28 indépendamment de l'effort exercé par le vérin 50, le panneau 28 est équipé d'un pion 60 de verrouillage coopérant avec un loquet 62 rotatif monté sur le support 46 d'un des montants dudit panneau comme cela est illustré à la figure 9. Le pion 60 est monté sur l'une des platines 42 d'un des montants 41.

Le panneau 28 est équipé en outre d'un levier 64 de commande accessible depuis l'extérieur pour commander le passage du loquet 62 d'une position verrouillée du pion 60 à une position verrouillée dudit pion. Le levier 64 est monté à rotation sur l'axe d'articulation 48 du panneau. Pour relier le levier 64 au loquet 62, une bielle 66 est ici prévue entre eux. Une première extrémité de la bielle 66 est articulée à rotation sur le levier 64 autour d'un axe d'articulation horizontal (non référencé) et une deuxième extrémité de la bielle est articulée à rotation sur le loquet 62 autour d'un autre axe d'articulation horizontal (non référencé).

Dans l'exemple de réalisation illustré, le loquet 62 rotatif comprend un boitier 68 fixé sur l'aile 46b du support, une came 70 de verrouillage à l'intérieur de laquelle est logé le pion 60, et une came 72 d'actionnement de la came 70. Les cames 70, 72 sont montées pivotantes sur le boitier 68. Le loquet 62 comprend encore deux ressorts (non référencés) agissant chacun sur une des cames 70, 72 pour maintenir ledit loquet à l'état déverrouillé après actionnement comme cela va être décrit par la suite.

Comme indiqué précédemment, lorsque l'opérateur souhaite faire passer le panneau 28 de sa position abaissée vers sa position relevée, il le fait pivoter dans le sens horaire.

Avant de pouvoir réaliser ce relevage du panneau 28, l'opérateur doit déverrouiller le panneau 28. Pour ce faire, l'opérateur exerce un effort sur le panneau 28 tendant à obtenir ce relevage et fait pivoter simultanément le levier 64 dans le sens horaire, ce pivotement ayant pour effet de commander le pivotement de la came 72 d'actionnement dans le sens horaire par l'intermédiaire de la bielle 66. Le pivotement de la came 72 libère la came 70 qui, sous l'effet du ressort associé, pivote à son tour dans le sens horaire dans une position de déverrouillage dans laquelle le pion 60 de verrouillage n'est plus bloqué par la came 70 et peut être désengagé de celle-ci.

Ensuite, l'opérateur peut commencer à faire pivoter le panneau 28 dans le sens horaire comme cela est illustré à la figure 10, puis le relever entièrement.

Après avoir actionné puis relâché le levier 64, la came 72 revient dans sa position initiale. L'effort exercé par le ressort du loquet 62 qui agit sur la came 70 maintient cette came dans sa position de déverrouillage comme cela est illustré à la figure 10.

Dès lors, lorsque le panneau 28 est par la suite ramené de sa position relevée vers sa position rabaissée, on obtient automatiquement le verrouillage automatique du panneau 28 sans actionnement spécifique du levier 64, le pion 60 de verrouillage dudit panneau venant se loger à l'intérieur de la came 70 et la ramenant dans sa position de verrouillage lors de la rotation finale dudit panneau.

En se référant de nouveau à la figure 5, le panneau 28 est également équipé d'un pion 74 de réglage qui est monté sur la platine 42 qui ne comprend pas le pion 60 de verrouillage. Chaque pion 60, 74 est fixé sur la platine 42 associée et s'étend longitudinalement en saillie. Les pions 60, 74 s'étendent dans des directions opposées. Le support 46 comprend également une vis 76 de réglage qui est engagée dans un trou fileté aménagé sur une bride dudit support et qui vient appuyer verticalement sur le pion 74 de réglage. Ceci permet de pouvoir régler l'inclinaison angulaire du panneau 28 par vissage de la vis 76 de sorte à pouvoir aligner dans le sens longitudinal ce panneau avec les autres panneaux 30, 32 du carénage latéral.

Comme indiqué précédemment, dans la position abaissée du panneau 28, les platines 42 associées à chaque montant 41 viennent buter contre le support 46 fixé au plancher 18. Pour le support 46 sur lequel est monté le loquet 62, une des platines 42 du montant 41 associé vient en appui contre le loquet 62 et l'autre platine 42 vient en appui contre la vis 76 de réglage dans cette position abaissée du panneau 28. Pour le support 46 dépourvu du loquet 62, une des platines 42 du montant 41 associé vient en appui contre la vis 76 de réglage dans la position abaissée du panneau 28.

Comme indiqué précédemment, la conception et le montage de chaque panneau 30, 32 sur la carrosserie sont analogues à ceux qui viennent d'être décrits pour le panneau 28. Par rapport au panneau 28, seulement la longueur des panneaux 30 et 32, la forme du profilé inférieur de ces panneaux ainsi que la position longitudinale des montants associés à ces panneaux diffèrent.

L'invention a été illustrée à titre d'exemple sur la base d'une carrosserie de véhicule routier de transport du type semi-remorque. L'invention est aussi applicable à une carrosserie de véhicule routier de transport du type porteur, camion, ou remorque.

## Revendications

1. Carrosserie de véhicule routier de transport de marchandises comprenant deux flancs (14) latéraux verticaux, un pavillon (16), et un plancher (18) assemblés entre eux et délimitant en partie un espace de chargement intérieur, au moins un carénage latéral (26) comprenant au moins un panneau (28) s'étendant longitudinalement et mobile à rotation entre une position abaissée d'utilisation dans laquelle ledit panneau est situé verticalement en-dessous de l'un des flancs (14) latéraux et une position relevée, et au moins un vérin (50) pourvu d'un corps (52) et d'une tige (54) pour exercer, au moins au cours du mouvement de relevage dudit panneau, un effort de poussée tendant à déplacer ledit panneau vers la position relevée,
**caractérisée en ce que** ledit panneau (28) comprend une pluralité de profilés (34 à 40) longitudinaux successifs dans le sens de la hauteur dudit panneau, et des montants (41) supportant les profilés longitudinaux, lesdits profilés (34 à 40) longitudinaux délimitant conjointement une face extérieure (43) continue dans le sens de la hauteur dudit panneau, chaque montant (41) dudit panneau étant équipé, à une extrémité supérieure, d'un organe de montage (42) articulé autour d'un axe d'articulation (48) horizontal monté sur un support (46) associé fixé au plancher (18) de ladite carrosserie, la tige (54) dudit vérin étant articulée sur l'organe de montage (42) d'un des montants dudit panneau autour d'un axe d'articulation (58) horizontal, et le corps (52) dudit vérin étant articulé sur le support (46) associé autour d'un axe d'articulation (56) horizontal,
et **en ce que** dans la position abaissée dudit panneau, les axes d'articulation (56, 58) du corps et de la tige du vérin sont décalés vers l'intérieur de la carrosserie par rapport au flanc (14) latéral situé du côté dudit panneau, l'axe d'articulation (58) de la tige du vérin étant décalé vers l'intérieur et vers le haut par rapport à l'axe d'articulation (48), et l'axe d'articulation (56) du corps du vérin étant décalé vers le bas par rapport à l'axe d'articulation (58) et par rapport à l'axe d'articulation (48).

2. Carrosserie selon la revendication 1, dans laquelle les profilés (34 à 40) longitudinaux dudit panneau sont assemblés entre eux, notamment par emboitement.

3. Carrosserie selon la revendication 1 ou 2, dans laquelle ledit vérin (50) est articulé de sorte à exercer, dans la position abaissée dudit panneau, un effort de poussée tendant à maintenir ledit panneau latéral dans ladite position abaissée.

4. Carrosserie selon l'une quelconque des revendications précédentes, dans laquelle ledit carénage latéral (26) comprend en outre au moins un organe de verrouillage (60) monté sur l'organe de montage (42) de l'un des montants dudit panneau et coopérant avec un organe de verrouillage (62) monté sur le support (46) associé pour le blocage dudit panneau dans la position abaissée.

5. Carrosserie selon la revendication 4, dans laquelle ledit carénage latéral (26) comprend en outre un levier (64) de commande accessible depuis l'extérieur et relié audit organe de verrouillage (62) monté sur le support (46) pour commander le déplacement dudit organe de verrouillage d'une position verrouillée dans laquelle il bloque un déplacement de l'organe de verrouillage (60) monté sur l'organe de montage (42) à une position déverrouillée dans laquelle ledit organe de verrouillage est laissé libre.

6. Carrosserie selon la revendication 5, dans laquelle ledit organe de verrouillage (62) monté sur le support (46) comprend une came (70) de verrouillage à l'intérieur de laquelle est logé l'organe de verrouillage (60) monté sur l'organe de montage (42), une came (72) d'actionnement de la came de verrouillage, et deux ressorts agissant chacun sur une desdites cames pour maintenir ledit organe verrouillage (62) dans la position déverrouillée après actionnement du levier (64) de commande et relâchement dudit levier.

7. Carrosserie selon l'une quelconque des revendications précédentes, dans laquelle ledit carénage latéral (26) comprend en outre un organe de réglage (76) de l'inclinaison dudit panneau monté sur le support (46).

8. Carrosserie selon l'une quelconque des revendications précédentes, dans laquelle, dans sa position abaissée, ledit panneau (28) vient en contact contre le flanc (14) latéral associé.

9. Carrosserie selon l'une quelconque des revendications précédentes, dans laquelle ledit carénage latéral (26) comprend une pluralité de panneaux (28 à 32) successifs dans le sens longitudinal et mobiles à rotation indépendamment, chaque panneau comprenant une pluralité de profilés longitudinaux successifs dans le sens de la hauteur dudit panneau, et des montants supportant lesdits profilés dudit panneau et articulés sur ladite carrosserie, lesdits profilés longitudinaux dudit panneau délimitant conjointement une face extérieure continue dans le sens de la hauteur dudit panneau.

## Patentansprüche

1. Karosserie eines Straßenfahrzeugs zur Beförderung von Gütern, zwei vertikale Seitenflanken (14), ein Dach (16) und einen Boden (18) umfassend, die miteinander zusammengefügt sind, und teilweise einen Innenladeraum begrenzen, mindestens eine Seitenverkleidung (26), die mindestens eine Platte (28) umfasst, die sich längs und drehbeweglich zwischen einer abgesenkten Nutzungsposition, in der die Platte vertikal unterhalb der einen der Seitenflanken (14) gelegen ist, und einer angehobenen Position erstreckt, und mindestens einen Zylinder (50), der mit einem Gehäuse (52) und einer Stange (54) versehen ist, um mindestens im Laufe der Hebebewegung der Platte eine Schubkraft auszuüben, die dazu tendiert, die Platte in die angehobene Position zu versetzen,
**dadurch gekennzeichnet, dass** die Platte (28) eine Vielzahl von aufeinanderfolgenden Längsprofilen (34 bis 40) in Richtung der Höhe der Platte umfasst, und Holme (41), die die Längsprofile stützen, wobei die Längsprofile (34 bis 40) gemeinsam eine durchgehende Außenseite (43) in Richtung der Höhe der Platte begrenzen, wobei jeder Holm (41) der Platte an einem oberen Ende mit einem Montageorgan (42) ausgerüstet ist, das um eine horizontale Gelenkachse (48) herum angelenkt ist, die auf einer zugeordneten Stütze (46) montiert ist, die am Boden (18) der Karosserie befestigt ist, wobei die Stange (54) des Zylinders an dem Montageorgan (42) eines der Holme der Platte um eine horizontale Gelenkachse (58) herum angelenkt ist, und das Gehäuse (52) des Zylinders an der zugeordneten Stütze (46) um eine horizontale Gelenkachse (56) herum angelenkt ist, und dadurch, dass in der abgesenkten Position der Platte, die Gelenkachsen (56, 58) des Gehäuses und der Stange des Zylinders in Bezug auf die Seitenflanke (14), die auf Seiten der Platte gelegen ist, in das Innere der Karosserie versetzt sind, wobei die Gelenkachse (58) der Stange des Zylinders in das Innere und nach oben in Bezug auf die Gelenkachse (48) versetzt ist, und die Gelenkachse (56) des Gehäuses des Zylinders in Bezug auf die Gelenkachse (58) und in Bezug auf die Gelenkachse (48) nach unten versetzt ist.

2. Karosserie nach Anspruch 1, wobei die Längsprofile (34 bis 40) der Platte insbesondere durch Einstecken miteinander zusammengefügt sind.

3. Karosserie nach Anspruch 1 oder 2, wobei der Zylinder (50) derart angelenkt ist, um in der abgesenkten Position der Platte eine Schubkraft auszuüben, die dazu tendiert, die Seitenplatte in der abgesenkten Position zu halten.

4. Karosserie nach einem der vorstehenden Ansprüche, wobei die Seitenverkleidung (26) weiter mindestens ein Verriegelungsorgan (60) umfasst, das auf dem Montageorgan (42) eines der Holme der Platte montiert ist, und mit einem Verriegelungsorgan (62) zusammenwirkt, das auf der zugeordneten Stütze (46) zum Blockieren der Platte in der abgesenkten Position montiert ist.

5. Karosserie nach Anspruch 4, wobei die Seitenverkleidung (26) weiter einen Steuerungshebel (64) umfasst, der von außen zugänglich ist, und an das Verriegelungsorgan (62), das an der Stütze (46) montiert ist, angeschlossen ist, um den Versatz des Verriegelungsorgans von einer verriegelten Position, in der es einen Versatz des auf dem Montageorgan (42) montierten Verriegelungsorgans (60) blockiert, in eine entriegelte Position zu steuern, in der das Verriegelungsorgan freigelassen wird.

6. Karosserie nach Anspruch 5, wobei das Verriegelungsorgan (62), das auf der Stütze (46) montiert ist, einen Verriegelungsnocken (70) umfasst, in dessen Inneren das an dem Montageorgan (42) montierte Verriegelungsorgan (60) aufgenommen ist, einen Betätigungsnocken (72) des Verriegelungsnockens, und zwei Federn, die jeweils auf einen der Nocken einwirken, um das Verriegelungsorgan (62) nach Betätigung des Steuerungshebels (64) und Lösens des Hebels in der entriegelten Position zu halten.

7. Karosserie nach einem der vorstehenden Ansprüche, wobei die Seitenverkleidung (26) weiter ein Einstellorgan (76) der Neigung der auf der Stütze (46) montierten Platte umfasst.

8. Karosserie nach einem der vorstehenden Ansprüche, wobei die Platte (28) in ihrer abgesenkten Position auf Kontakt an die zugeordnete Seitenflanke (14) kommt.

9. Karosserie nach einem der vorstehenden Ansprüche, wobei die Seitenverkleidung (26) eine Vielzahl von in der Längsrichtung aufeinanderfolgenden und unabhängig voneinander drehbeweglichen Platten (28 bis 32) umfasst, wobei jede Platte eine Vielzahl von aufeinanderfolgenden Längsprofilen in der Höhenrichtung der Platte umfasst, und Holme, die die Profile der Platte stützen und an der Karosserie angelenkt sind, wobei die Längsprofile der Platte gemeinsam eine in der Höhenrichtung der Platte durchgehende Außenseite begrenzen.

## Claims

1. A bodywork of a road vehicle for transporting goods comprising two vertical lateral flanks (14), a roof (16), and a floor (18) assembled with each other and partially delimiting an interior loading space, at least one lateral fairing (26) comprising at least one panel (28) extending longitudinally and movable in rotation between a lowered position of use in which said panel is located vertically below one of the lateral flanks (14) and a lifted position, and at least one cylinder (50) provided with a body (52) and a rod (54) to exert, at least during the movement of lifting said panel, a thrust force tending to displace said panel to the lifted position,
**characterised in that** said panel (28) comprises a plurality of successive longitudinal profiles (34 to 40) in the direction of the height of said panel, and pillars (41) supporting the longitudinal profiles, said longitudinal profiles (34 to 40) jointly delimiting an outer continuous face (43) in the direction of the height of said panel, each pillar (41) of said panel being equipped, at an upper end, with a mounting member (42) hinged about a horizontal hinge axis (48) mounted on an associated support (46) fastened to the floor (18) of said bodywork, the rod (54) of said cylinder being hinged on the mounting member (42) of one of the pillars of said panel about a horizontal hinge axis (58), and the body (52) of said cylinder being hinged on the associated support (46) about a horizontal hinge axis (56),
and **in that** in the lowered position of said panel, the hinge axes (56, 58) of the body and of the cylinder rod are offset inwardly of the bodywork relative to the lateral flank (14) located on the side of said panel, the hinge axis (58) of the cylinder rod being offset inwardly and upwardly relative to the hinge axis (48), and the hinge axis (56) of the cylinder body being offset downwardly relative to the hinge axis (58) and relative to the hinge axis (48).

2. The bodywork according to claim 1, wherein the longitudinal profiles (34 to 40) of said panel are assembled with each other, in particular by interlocking.

3. The bodywork according to claim 1 or 2, wherein said cylinder (50) is hinged so as to exert, in the lowered position of said panel, a thrust force tending to maintain said lateral panel in said lowered position.

4. The bodywork according to any one of the preceding claims, wherein said lateral fairing (26) further comprises at least one locking member (60) mounted on the mounting member (42) of one of the pillars of said panel and cooperating with a locking member (62) mounted on the associated support (46) for blocking said panel in the lowered position.

5. The bodywork according to claim 4, wherein said lateral fairing (26) further comprises a control lever (64) accessible from the outside and connected to said locking member (62) mounted on the support (46) to control the displacement of said locking member from a locked position in which it blocks a displacement of the locking member (60) mounted on the mounting member (42) to an unlocked position in which said locking member is left free.

6. The bodywork according to claim 5, wherein said locking member (62) mounted on the support (46) comprises a locking cam (70) inside which the locking member (60) which is mounted on the mounting member (42) is housed, a cam (72) for actuating the locking cam, and two springs each acting on one of said cams to maintain said locking member (62) in the unlocked position after actuation of the control lever (64) and release of said lever.

7. The bodywork according to any one of the preceding claims, wherein said lateral fairing (26) further comprises a member (76) for adjusting the inclination of said panel mounted on the support (46).

8. The bodywork according to any one of the preceding claims, wherein, in the lowered position thereof, said panel (28) comes into contact against the associated lateral flank (14).

9. The bodywork according to any one of the preceding claims, wherein said lateral fairing (26) comprises a plurality of successive panels (28 to 32) in the longitudinal direction and independently movable in rotation, each panel comprising a plurality of successive longitudinal profiles in the direction of the height of said panel, and pillars supporting said profiles of said panel and hinged on said bodywork, said longitudinal profiles of said panel jointly delimiting a continuous outer face in the direction of the height of said panel.
